(19) Europäisches Patentamt
European Patent Office
Office européen des brevets

(11) **EP 4 729 997 A1**

(12) **EUROPEAN PATENT APPLICATION**
published in accordance with Art. 153(4) EPC

(43) Date of publication:
**22.04.2026 Bulletin 2026/17**

(21) Application number: **24823316.5**

(22) Date of filing: **07.06.2024**

(51) International Patent Classification (IPC):
**G02B 6/02** (2006.01)    **G02B 6/036** (2006.01)

(52) Cooperative Patent Classification (CPC):
**G02B 6/02; G02B 6/036**

(86) International application number:
**PCT/JP2024/020843**

(87) International publication number:
**WO 2024/257700 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 JP 2023099446**

(71) Applicant: **Fujikura Ltd.**
**Tokyo 135-8512 (JP)**

(72) Inventors:
• **KAJIKAWA, Shota**
**Sakura-shi, Chiba 285-8550 (JP)**
• **ODA, Takuya**
**Sakura-shi, Chiba 285-8550 (JP)**
• **TAKENAGA, Katsuhiro**
**Sakura-shi, Chiba 285-8550 (JP)**

(74) Representative: **Hoffmann Eitle**
**Patent- und Rechtsanwälte PartmbB**
**Arabellastraße 30**
**81925 München (DE)**

(54) **MULTICORE FIBER**

(57)    A multicore fiber (1) includes two to four core elements (10) each including a core (11) and a trench layer (13) that surrounds an outer circumferential surface of the core (11), and a cladding (20) that surrounds the outer circumferential surface of each core element (10) without any gap. The diameter of the core element (10) is equal to or smaller than a size smaller by 1 μm than a core pitch A between the core element (10) and another core element (10) adjacent thereto at a shortest distance, the mode field diameter of light that propagates through the core (11) is 8.2 μm or more and 8.8 μm or less, and a trench volume TV that is a product of a cross-sectional area of the trench layer (13) in a cross section perpendicular to the longitudinal direction of the cladding (20) and a relative refractive index difference of the trench layer (13) with respect to the cladding (20) is 105 μm²% or more and 350 μm²% or less.

FIG. 2

EP 4 729 997 A1

**Description**

Technical Field

The present invention relates to a multicore fiber.

Background Art

With the spread of optical fiber communication systems, the amount of information transmitted by optical fibers has dramatically increased. In view of such a background, a multicore fiber in which the outer peripheries of a plurality of cores are surrounded by one cladding may be used. Since the multicore fiber can transmit a plurality of signals by light propagating through each of the plurality of cores, the transmission capacity per optical fiber is increased.

Patent Literature 1 below describes a multicore fiber in which four core elements are arranged. A core element includes a core and a trench surrounding the outer circumferential surface of the core and having a refractive index lower than that of the cladding. In Patent Literature 1, the trench is referred to as a first cladding region, and the aforementioned cladding is referred to as a second cladding region. In the multicore fiber, the diameter of the cladding is 125 $\mu$m, and crosstalk of -54 dB/km is achieved.

[Patent Literature 1] JP 2020-86054 A

Summary of Invention

As described above, the diameter of the cladding of the multicore fiber of Patent Literature 1 is 125 $\mu$m. However, in a case where a multicore fiber is used for an optical fiber cable, for example, a multicore fiber having a cladding with a smaller diameter is required due to a demand for disposing more multicore fibers in a limited space, a demand for improving mechanical reliability of a multicore fiber, and the like. On the other hand, when the diameter of the cladding is reduced, the distance between the core and the outer circumferential surface of the cladding is reduced, so that the confinement loss easily increases, and there is a concern that the core pitch is reduced, so that crosstalk easily increases.

Therefore, an object of the present invention is to provide a multicore fiber capable of suppressing crosstalk and confinement loss while reducing the diameter of a cladding.

Aspect 1 of the present invention for solving the above problems is a multicore fiber including two to four core elements each including a core and a trench layer that surrounds an outer circumferential surface of the core, and a cladding that surrounds the outer circumferential surface of each of the core elements without any gap. Each of the core elements is disposed on a circumference centered on the center of the cladding, the diameter of each of the core elements is equal to or smaller than a size smaller by 1 $\mu$m than the core pitch between the core element and another core element adjacent thereto at a shortest distance, the mode field diameter of light in the case where the light having a wavelength of 1.31 $\mu$m propagates through the core is 8.8 $\mu$m or less, and a trench volume that is a product of a cross-sectional area of the trench layer in a cross section perpendicular to the longitudinal direction of the cladding and an absolute value of a relative refractive index difference of the trench layer with respect to the cladding is 105 $\mu$m$^2$% or more and 350 $\mu$m$^2$% or less.

According to such a multicore fiber, when light having a wavelength of 1.31 $\mu$m is propagated through the multicore fiber, crosstalk from one adjacent core at a bending radius of 300 mm can be set to -35 dB/km or less and a confinement loss at a bending radius of 76 mm can be set to 0.01 dB/km or less even when the cladding thickness is set to about 25.3 $\mu$m and the core pitch A is set to about 35 $\mu$m. Therefore, in the case where light having a wavelength of 1.31 $\mu$m is propagated through the multicore fiber, when the number of core elements is four, the diameter of the cladding can be set to 104 $\mu$m or less, and when the number of core elements is two, the diameter of the cladding can be set to 90 $\mu$m or less, while maintaining sufficient quality of optical communication. As described above, according to the multicore fiber of the present invention, it is possible to suppress crosstalk and confinement loss while reducing the diameter of the cladding.

Aspect 2 of the present invention is the multicore fiber according to Aspect 1 in which the trench volume is 135 $\mu$m$^2$% or more.

With such a configuration, when light having a wavelength of 1.31 $\mu$m is propagated through the multicore fiber, the confinement loss can be further reduced to 0.001 dB/km or less even if the cladding thickness is about 25.3 $\mu$m.

Aspect 3 of the present invention is the multicore fiber according to Aspect 1 in which the trench volume is 190 $\mu$m$^2$% or more.

With such a configuration, when light having a wavelength of 1.31 $\mu$m is propagated through the multicore fiber, the confinement loss can be reduced to 0.01 dB/km or less even if the cladding thickness is about 21.7 $\mu$m.

Aspect 4 of the present invention is the multicore fiber according to Aspect 1 in which the trench volume is 215 $\mu$m$^2$% or more.

With such a configuration, when light having a wavelength of 1.31 $\mu$m is propagated through the multicore fiber, the confinement loss can be reduced to 0.001 dB/km or less even if the cladding thickness is about 21.7 $\mu$m.

Aspect 5 of the present invention is the multicore fiber according to Aspect 1 in which the trench volume is 234 $\mu m^2\%$ or more.

With such a configuration, when light having a wavelength of 1.625 $\mu m$ is propagated through the multicore fiber, crosstalk from one adjacent core can be -30 dB/km or less even if the core pitch is about 35 $\mu m$.

Aspect 6 of the present invention is the multicore fiber according to Aspect 1 in which the trench volume is 269 $\mu m^2\%$ or more.

With such a configuration, when light having a wavelength of 1.625 $\mu m$ is propagated through the multicore fiber, the confinement loss can be reduced to 0.01 dB/km or less even if the cladding thickness is about 21.7 $\mu m$.

Aspect 7 of the present invention is the multicore fiber according to Aspect 1 in which the trench volume is 306 $\mu m^2\%$ or more.

With such a configuration, when light having a wavelength of 1.625 $\mu m$ is propagated through the multicore fiber, the confinement loss can be reduced to 0.001 dB/km or less even if the cladding thickness is about 21.7 $\mu m$.

In Aspect 3 and the subsequent aspects, the core pitch can be about 35 $\mu m$, and the cladding thickness can be about 21.7 $\mu m$. Therefore, when there are four core elements, the diameter of the cladding can be 93 $\mu m$ or less, and when there are two core elements, the diameter of the cladding can be 80 $\mu m$ or less.

As described above, according to the present invention, a multicore fiber capable of suppressing crosstalk and confinement loss while reducing the diameter of a cladding is provided.

Brief Description of Drawings

[FIG. 1] FIG. 1 is a diagram illustrating a cross section perpendicular to a longitudinal direction of a multicore fiber according to an embodiment of the present invention.

[FIG. 2] FIG. 2 is a diagram illustrating a refractive index profile of a core element in FIG. 1.

[FIG. 3] FIG. 3 is a diagram illustrating a relationship between a bending radius and the magnitude of crosstalk in the case of propagating light having a wavelength of 1.31 $\mu m$.

[FIG. 4] FIG. 4 is a diagram illustrating a relationship between a bending radius and the magnitude of crosstalk in the case of propagating light having a wavelength of 1.625 $\mu m$.

[FIG. 5] FIG. 5 is a diagram illustrating a relationship between the cladding thickness and the magnitude of a confinement loss.

[FIG. 6] FIG. 6 is a diagram illustrating a relationship between the wavelength and the confinement loss.

[FIG. 7] FIG. 7 is a diagram illustrating a relationship between the trench volume and the core pitch in the case of propagating light having a wavelength of 1.31 $\mu m$.

[FIG. 8] FIG. 8 is a diagram illustrating a relationship between the trench volume and the core pitch in the case of propagating light having a wavelength of 1.625 $\mu m$.

[FIG. 9] FIG. 9 is a diagram illustrating a relationship between the trench volume and the cladding thickness in the case of propagating light having a wavelength of 1.31 $\mu m$.

[FIG. 10] FIG. 10 is a diagram illustrating a relationship between the trench volume and the cladding thickness in the case of propagating light having a wavelength of 1.625 $\mu m$.

[FIG. 11] FIG. 11 is a diagram illustrating a relationship between the trench volume and a 22 m-cable cutoff wavelength.

[FIG. 12] FIG. 12 is a diagram illustrating a multicore fiber in which two core elements are provided.

Description of Embodiments

Hereinafter, a preferred embodiment of a multicore fiber according to the present invention will be described in detail with reference to the drawings. The embodiment exemplified below is intended to facilitate understanding of the present invention and is not intended to limit the present invention. The present invention can be modified and improved from the embodiment within the scope of the claims. Note that, for easy understanding, scales in the respective drawings may be different from scales described in the following description.

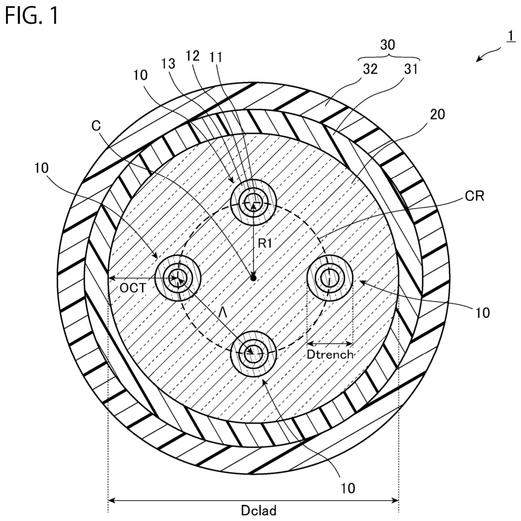

FIG. 1 is a diagram illustrating a cross section perpendicular to a longitudinal direction of a multicore fiber according to the present embodiment. A multicore fiber 1 according to the present embodiment includes four core elements 10, a cladding 20 that surrounds the outer circumferential surfaces of the respective core elements 10 without any gap, and a coating layer 30 that coats the outer circumferential surface of the cladding 20. The cladding 20 is also called a common cladding because it surrounds the outer circumferential surfaces of the respective core elements 10.

Each core element 10 includes a core 11, an outer core 12 that surrounds the outer circumferential surface of the core 11 without any gap, and a trench layer 13 that surrounds the outer circumferential surface of the outer core 12 without any gap.

The respective cores 11 are positioned at equal intervals on the same circumference CR centered on the center C of the cladding 20. The diameter of the core 11 is, for example, 5.5 μm or more and 8.8 μm or less. The outer diameter of the outer core 12, that is, the inner diameter of the trench layer 13, is 12 μm or more and 25 μm or less. In addition, the outer diameter of the trench layer 13, that is, the diameter of the core element 10, is equal to or smaller than a size smaller by 1 μm than the core pitch between the core element 10 and another core element 10 adjacent thereto at a shortest distance, for example, 24 μm or more and 40 μm or less. In the following description, the outer diameter of the trench layer 13 may be denoted by Dtrench as illustrated in FIG. 1. In addition, the inter-center pitch between the cores 11 adjacent to each other may be denoted by $\Lambda$, and in this case, the inter-center pitch of the cores 11 positioned diagonally is $2^{1/2}\Lambda$. In addition, the distance between the center of the core 11 and the outer circumferential surface of the cladding 20 may be referred to as a cladding thickness, and the cladding thickness may be denoted by OCT. Note that the diameter of the core 11 may be indicated by $2 \times r1$, the outer diameter of the outer core 12, that is, the inner diameter of the trench layer, may be indicated by $2 \times r2$, and the outer diameter of the trench layer 13, that is, the diameter of the core element 10, may be indicated by $2 \times r3$. Therefore, Dtrench = $2 \times r3$. In addition, a distance from the center of the cladding 20 to the center of the core 11 may be denoted by R1. In addition, the diameter of the cladding 20 may be denoted by Dclad.

In this case, the diameter Dclad of the cladding 20 of the present embodiment can be expressed by the following Expression (1).

$$\mathrm{Dclad} = 2^{1/2}\Lambda + 2\mathrm{OCT} \quad (1)$$

The refractive index of the core 11 is higher than the refractive index of the outer core 12 or the cladding 20, and the relative refractive index difference of the core 11 with respect to the cladding 20 is 0.2% or more and 0.9% or less. The refractive index of the trench layer 13 is lower than the refractive index of the outer core 12 or the cladding 20. The relative refractive index difference of the trench layer 13 with respect to the cladding 20 is - 0.9% or more and -0.1% or less. The refractive index of the outer core 12 may be the same as the refractive index of the cladding 20, or may be higher or lower than the refractive index of the cladding 20. The relative refractive index difference of the outer core 12 with respect to the cladding 20 is -0.3% or more and 0.3% or less. Note that the relative refractive index difference of the core 11 with respect to the cladding 20 may be denoted by $\Delta 1$, the relative refractive index difference of the outer core 12 with respect to the cladding 20 may be denoted by $\Delta 2$, and the relative refractive index difference of the trench layer 13 with respect to the cladding 20 may be denoted by $\Delta 3$.

The core 11 is made of, for example, silica glass to which a dopant such as germanium having a high refractive index is added. The cladding 20 is made of, for example, silica glass to which no dopant is added. The trench layer 13 is made of silica glass to which a dopant such as fluorine having a low refractive index is added. To the outer core 12, a dopant having a high refractive index is added, a dopant having a low refractive index is added, or no dopant is added, depending on the relationship with the refractive index of the cladding 20. Whether or not the dopant is added to the core 11, the outer core 12, the trench layer 13, and the cladding 20, and the type of the dopant in the case of being added are not limited to the above.

The product of the cross-sectional area of the trench layer 13 in a cross section perpendicular to the longitudinal direction of the cladding 20 and the absolute value of the relative refractive index difference of the trench layer 13 with respect to the cladding 20 is defined as a trench volume. The trench volume may be denoted by TV. The cross-sectional area of the trench layer 13 is $(r3^2\text{-}r2^2) \times \pi$. Therefore, the trench volume TV can be expressed by the following Expression (2).

$$\mathrm{TV} = (r3^2 - r2^2) \times \pi \times |\Delta 3| \quad (2)$$

When the diameter of the cladding 20 is small, unevenness of residual stress in the multicore fiber 1 may occur due to a marker (not illustrated) or the like, and fiber curling may occur. From the viewpoint of suppressing the fiber curling, a distance R1 from the center of the cladding 20 to the center of the core 11 is preferably equal to or more than the cladding thickness OCT, that is, OCT/R1 ≤ 1. In this case, the marker can be easily positioned closer to the center C of the cladding than the core element 10, and fiber curling can be suppressed.

The coating layer 30 includes an inner coating layer 31 coating the outer circumferential surface of the cladding 20, and an outer coating layer 32 coating the outer circumferential surface of the inner coating layer 31. The inner coating layer 31 and the outer coating layer 32 are each made of a resin such as an ultraviolet curable resin, and the inner coating layer 31 and the outer coating layer 32 are made of resins different from each other.

Next, characteristics of the multicore fiber 1 will be described. In the following description, description may be given based on the assumption that the significant digits are three digits.

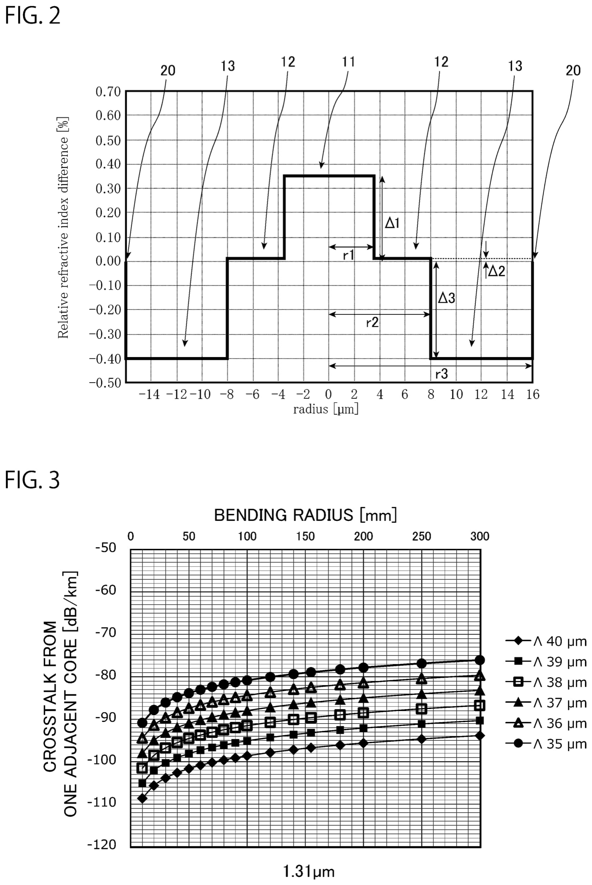

FIG. 2 is a diagram illustrating a predetermined refractive index profile of the core element 10 of the multicore fiber 1 of FIG. 1. In FIG. 2, positions indicating relative refractive index differences of the core 11, the outer core 12, the trench layer 13, and the cladding 20 are denoted by the same reference numerals. In this example, the relative refractive index difference $\Delta 2$ of the outer core 12 with respect to the cladding 20 is 0.01%. The relative refractive index difference $\Delta 1$ of the core 11 with respect to the cladding 20 is 0.35%. The relative refractive index difference $\Delta 3$ of the trench layer 13 with respect to the cladding 20 is -0.4%. In addition, the diameter $2 \times r1$ of the core 11 is 7 $\mu$m, the outer diameter $2 \times r2$ of the outer core 12 is 16 $\mu$m, and the outer diameter $2 \times r3$ of the trench layer 13, that is the diameter of the core element 10, is 32 $\mu$m. In this case, the trench volume TV is approximately 234 $\mu$m$^2$%. In this case, the optical characteristics of the core element 10 are as shown in Table 1 below.

TABLE 1

| Mode field diameter MFD [$\mu$m] | 8.5 |
|---|---|
| Cutoff wavelength $\lambda$ cc [$\mu$m] | 1.25 |
| Zero dispersion wavelength Dzero [$\mu$m] | 1.32 |
| Wavelength dispersion Disp/f @1.55$\mu$m [ps/(nm $\times$ km)] | 17.8 |
| Wavelength dispersion Disp/f @1.625$\mu$m [ps/(nm $\times$ km)] | 22.6 |
| Dispersion slope Slope/f [ps/(nm$^2 \times$ km)] | 0.0915 |
| Confinement loss CL | Conform to G.657A1 |

Next, crosstalk XT of the core element having the refractive index profile of FIG. 2 will be described. FIG. 3 is a diagram illustrating a relationship between the bending radius of the multicore fiber 1 and the crosstalk XT from one adjacent core in the case where light having a wavelength of 1.31 $\mu$m is propagated. As illustrated in FIG. 3, in the case where light having a wavelength of 1.31 $\mu$m is propagated, when the core pitch A is 35 $\mu$m, which is the smallest, the crosstalk XT from one adjacent core is smaller than -75 dB/km at the maximum in the case where the bending radius of the multicore fiber 1 is 300 mm. In the case of where light having a wavelength of 1.31 $\mu$m is propagated through the multicore fiber 1, if the amount of crosstalk from one adjacent core is -35 dB/km or less, sufficient quality of optical communication is maintained.

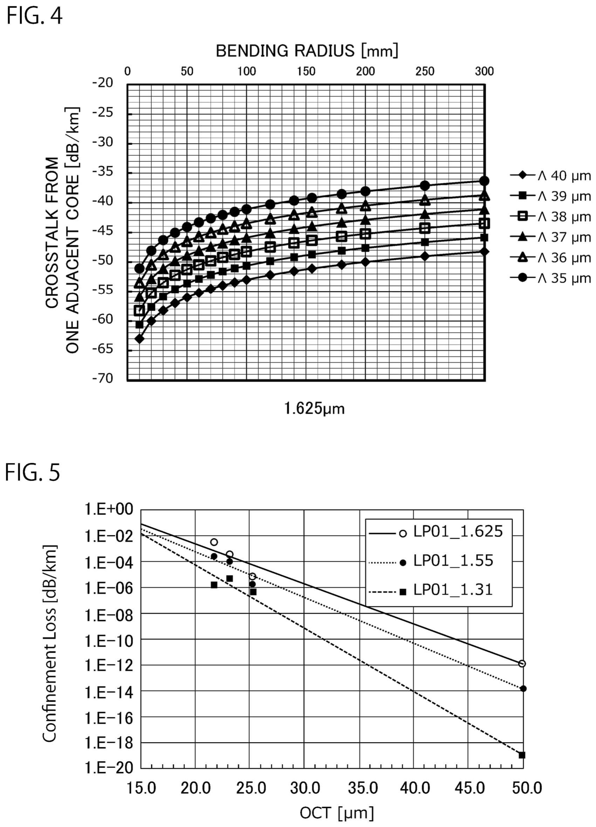

FIG. 4 is a diagram illustrating a relationship between the bending radius of the multicore fiber 1 and the crosstalk XT from one adjacent core in the case where light having a wavelength of 1.625 $\mu$m is propagated. As illustrated in FIG. 4, in the case where light having a wavelength of 1.625 $\mu$m is propagated, when the core pitch A is 35 $\mu$m, which is the smallest, the crosstalk XT from one adjacent core is smaller than -36 dB/km at the maximum in the case where the bending radius of the multicore fiber 1 is 300 mm. In the case where light having a wavelength of 1.625 $\mu$m is propagated through the multicore fiber 1, if the amount of crosstalk between the cores adjacent to each other is -30 dB/km or less, sufficient quality of optical communication is maintained.

In the example of FIG. 2, since the outer diameter $2 \times r3$ of the trench layer 13 is 32 $\mu$m, the core pitch A is preferably 33 $\mu$m or more from the viewpoint of manufacturing. In the present description, the case where the core pitch A is 35 $\mu$m or more has been considered.

Next, a confinement loss CL of the core element having the refractive index profile of FIG. 2 will be described. FIG. 5 is a diagram illustrating a relationship between the cladding thickness OCT and the magnitude of the confinement loss CL. In FIG. 5, the core element 10 is disposed in a single-core fiber in which the diameter of the cladding is 100 $\mu$m and the outer diameter including the coating layer is 160 $\mu$m, and the confinement loss CL is obtained by simulation while the position of the core element 10 is changed from the center to the outer circumferential side of the cladding. In addition, the bending radius of the optical fiber at this time is set to 76 mm. The bending radius 76 mm of the optical fiber is a radius of a general bobbin, and is a small bending radius as compared with the bending in an optical fiber cable. As illustrated in FIG. 5, in the case of propagating light having a wavelength of 1.625 $\mu$m in which confinement loss is likely to deteriorate, the cladding thickness OCT needs to be 21.5 $\mu$m or more in order for the confinement loss CL to be 0.001 dB/km or less. This condition is the same even in the multicore fiber 1. In the case where light having a wavelength of 1.55 $\mu$m is propagated, if the cladding thickness OCT is 19.3 $\mu$m or more, the confinement loss CL is 0.001 dB/km or less. In the case where light having a wavelength of 1.31 $\mu$m is propagated, if the cladding thickness OCT is 17.5 $\mu$m or more, the confinement loss CL is 0.001 dB/km or less. The magnitude of the confinement loss CL is a value lower by two orders of magnitude than the loss of light generally required in optical communication. Therefore, if the confinement loss CL is 0.001 dB/km or less, it is a sufficiently small loss in optical communication. In the case where light having a wavelength of 1.625 $\mu$m is propagated through the multicore fiber 1, if the confinement loss CL is 0.01 dB/km or less, sufficient quality of optical communication is maintained.

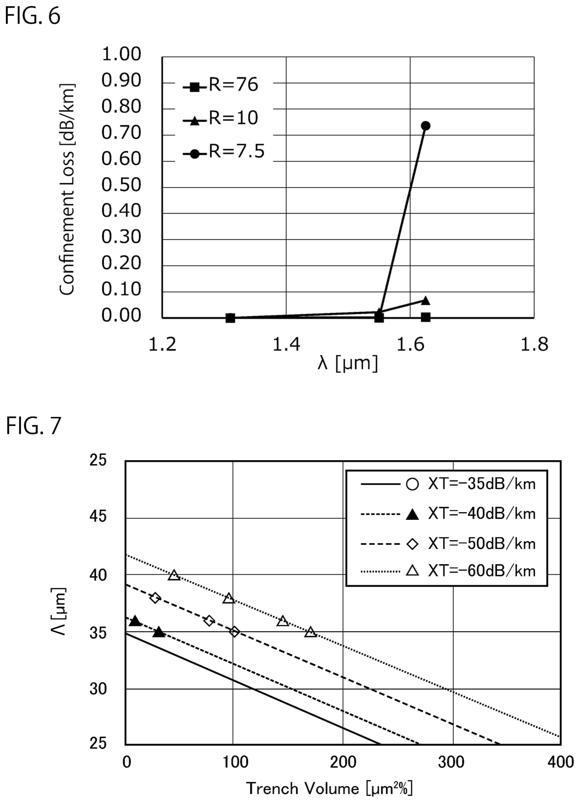

FIG. 6 is a diagram illustrating a relationship between the wavelength and the confinement loss. FIG. 6 illustrates cases where the bending radius R is 76 mm, 10 mm, and 7.5 mm. In FIG. 6, simulation is performed using the multicore fiber 1 in which the core element 10 has the refractive index profile of FIG. 2, the core pitch A is 40 μm, the cladding thickness OCT is 21.7 μm, the diameter of the cladding 20 is 100 μm, and the outer diameter of the coating layer 30 is 160 μm. As illustrated in FIG. 6, it can be seen that even when light having a wavelength of 1.625 μm with the largest confinement loss is propagated and the bending radius of the multicore fiber 1 is set to 7.5 mm, the confinement loss is about 0.75 dB/km. According to ITU-T G.657 A2, the confinement loss in the case where light having a wavelength of 1.625 μm is propagated through an optical fiber having a bending radius of 7.5 mm is 1.0 dB/turn or less. Therefore, the confinement loss illustrated in FIG. 6 sufficiently satisfies ITU-T G.657 A2.

As described above, in the case of the core element having the refractive index profile of FIG. 2, the core pitch A can be set to 35 μm, and the cladding thickness OCT can be set to 21.5 μm. In this case, according to Expression (1), Dclad is approximately 92.5 μm. Therefore, in the case of the core having the refractive index profile of FIG. 2, a multicore fiber having the characteristics of crosstalk and confinement loss required by the market and having the cladding 20 whose diameter is 95 μm or less can be realized. In the case of the core element having the refractive index profile of FIG. 2, even when the core pitch A is set to 40 μm and the cladding thickness OCT is set to 21.5 μm, Dclad is approximately 99.97 μm. Therefore, in the case of the core having the refractive index profile of FIG. 2, when the core pitch A is set to 40 μm, the crosstalk XT can be further reduced, and a multicore fiber having the characteristics of crosstalk and confinement loss required by the market and having the cladding 20 whose outer diameter is 100 μm or less can be realized.

Next, the crosstalk XT and the confinement loss CL in the case where the refractive index profile of FIG. 2 is changed and the trench volume TV is changed will be described.

FIG. 7 is a diagram illustrating a relationship between the trench volume TV and the core pitch A when light having a wavelength of 1.31 μm is propagated through the core element 10 of the multicore fiber 1. FIG. 7 was obtained by simulating a multicore fiber in which the diameter of the cladding 20 is 100 μm, the outer diameter of the coating layer 30 is 160 μm, and the bending radius is 300 mm and which has a profile shown in Table 2 below. Each core element 10 of the multicore fiber 1 used for the simulation has a profile as shown in Table 2. Specifically, in the samples of multicore fibers A to F in Table 2, the core pitch A is set to 35 μm, 36 μm, 38 μm, and 40 μm, and a relationship between the crosstalk XT from one adjacent core and the trench volume TV in each core pitch A was obtained. Using this relationship, the relationship between the trench volume TV and the core pitch A is fitted when the crosstalk XT from one adjacent core is -35 dB/km, -40 dB/km, -50 dB/km, and -60 dB/km. Therefore, FIG. 7 illustrates a relationship between the trench volume TV and the core pitch A at which the crosstalk XT from one adjacent core is constant. The bending radius of 300 mm is a bending radius of a general optical fiber in an optical fiber cable.

TABLE 2

|   | r1 [μm] | r2 [μm] | r3 [μm] | Δ1 % | Δ2 % | Δ3 % |
|---|---------|---------|---------|------|------|------|
| A | 3.5     | 8       | 16.0    | 0.35 | 0.01 | -0.4 |
| B | 3.5     | 8       | 12.5    | 0.35 | 0.01 | -0.4 |
| C | 4.43    | 9.04    | 17.52   | 0.35 | -0.03| -0.3 |
| D | 3.8     | 9       | 14      | 0.35 | 0    | -0.7 |
| E | 3.8     | 9       | 16      | 0.35 | 0    | -0.7 |
| F | 3.5     | 8       | 12.5    | 0.35 | 0.01 | -0.7 |

Mode field diameters MFD of a wavelength of 1.31 μm propagating through the cores 11 of A to F in Table 2 are 8.5 μm, 8.5 μm, 8.6 μm, 8.5 μm, 8.5 μm, and 8.4 μm in the order of A to F.

In FIG. 7, the relationship between the trench volume TV and the core pitch A is as follows.

When the crosstalk XT from one adjacent core is -35 dB/km:

$$\Lambda = -0.0415 TV + 34.9$$

When the crosstalk XT from one adjacent core is -40 dB/km:

$$\Lambda = -0.0413 TV + 36.3$$

When the crosstalk XT from one adjacent core is -50 dB/km:

$$\Lambda = -0.0407 TV + 39.1$$

When the crosstalk XT from one adjacent core is -60 dB/km:

$$\Lambda = -0.0402TV + 41.9$$

As described above, when the outer diameter Dtrench of the trench layer 13 is 32 μm, it is not common to make the core pitch smaller than 33 μm. As illustrated in FIG. 7, when the core pitch is 35 μm or more and light having a wavelength of 1.31 μm is propagated, in order to make the crosstalk XT from one adjacent core -35 dB/km or less, the crosstalk XT from one adjacent core is -35 dB/km or less even if the trench volume TV is 0, that is, even if the trench layer 13 is not present. In addition, when the core pitch A is 35 μm or more, if the trench volume TV is 101 μm2% or more, the crosstalk XT can be suppressed to -50 dB/km or less, and if the trench volume TV is 172 μm2% or more, the crosstalk XT can be suppressed to -60 dB/km or less. In addition, when the core pitch A is 40 μm or more, even if the trench volume TV is 0, the crosstalk XT from one adjacent core is -50 dB/km or less, and if the trench volume TV is 47.3 μm2% or more, the crosstalk XT from one adjacent core can be suppressed to -60 dB/km or less.

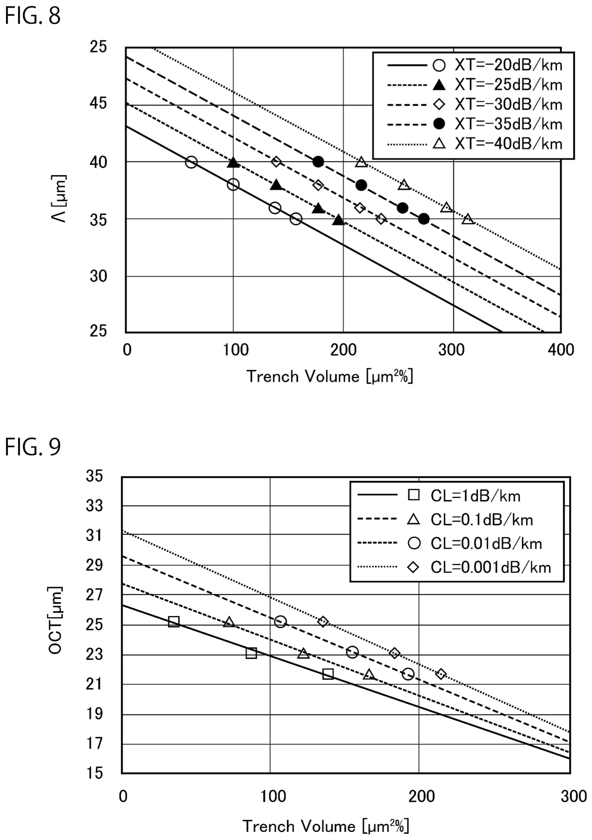

FIG. 8 is a diagram illustrating a relationship between the trench volume TV and the core pitch A when light having a wavelength of 1.625 μm is propagated through the core element 10 of the multicore fiber 1 under the same conditions as in the case of FIG. 7.

In the case of FIG. 8, the relationship between the trench volume TV and the core pitch A is as follows.

When the crosstalk XT from one adjacent core is -20 dB/km:

$$\Lambda = -0.0524TV + 43.2$$

When the crosstalk XT from one adjacent core is -25 dB/km:

$$\Lambda = -0.0522TV + 45.3$$

When the crosstalk XT from one adjacent core is -30 dB/km:

$$\Lambda = -0.0521TV + 47.2$$

When the crosstalk XT from one adjacent core is -35 dB/km:

$$\Lambda = -0.0519TV + 49.2$$

When the crosstalk XT from one adjacent core is -40 dB/km:

$$\Lambda = -0.0518TV + 51.2$$

As illustrated in FIG. 8, in the case where light having a wavelength of 1.625 μm is propagated, if the core pitch A is 35 μm or more and the trench volume TV is 234 μm or more, the crosstalk XT from one adjacent core is -30 dB/km or less. In addition, when the core pitch A is 35 μm or more, if the trench volume TV is 274 μm2% or more, the crosstalk XT can be suppressed to -35 dB/km or less, and if the trench volume TV is 313 μm2% or more, the crosstalk XT can be suppressed to -40 dB/km or less. In addition, when the core pitch A is 40 μm or more, if the trench volume TV is 138 μm2% or more, the crosstalk XT can be suppressed to -30 dB/km or less, if the trench volume TV is 177 μm2% or more, the crosstalk XT can be suppressed to -35 dB/km or less, and if the trench volume TV is 216 μm2% or more, the crosstalk XT can be suppressed to -40 dB/km or less.

FIG. 9 is a diagram illustrating a relationship between the trench volume TV and the cladding thickness OCT when light having a wavelength of 1.31 μm is propagated through the core element 10 of the multicore fiber 1. FIG. 9 was obtained by simulating a multicore fiber in which the diameter of the cladding 20 is 100 μm, the outer diameter of the coating layer 30 is 160 μm, and the bending radius is 76 mm and which has a profile shown in Table 2 below. Specifically, in the samples of the multicore fibers A to F in Table 2, the cladding thickness OCT is set to 21.7 μm, 23.1 μm, 23.5 μm, 24.5 μm, and 25.3 μm, and the relationship between the confinement loss CL and the trench volume TV in each cladding thickness OCT was obtained. Then, using this relationship, the relationship between the trench volume TV and the cladding thickness OCT is fitted when the confinement loss CL is 0.001 dB/km, 0.01 dB/km, 0.1 dB/km, and 1 dB/km. Therefore, FIG. 9 illustrates the relationship between the trench volume TV and the cladding thickness OCT in which the confinement loss CL is constant.

In FIG. 9, the relationship between the trench volume TV and the cladding thickness OCT is as follows.

When confinement loss CL is 1 dB/km:

$$OCT = -0.0343TV + 26.3$$

When confinement loss CL is 0.1 dB/km:

$$OCT = -0.0380TV + 27.9$$

When confinement loss CL is 0.01 dB/km:

$$OCT = -0.0420TV + 29.7$$

When confinement loss CL is 0.001 dB/km:

$$OCT = -0.0452TV + 31.4$$

As illustrated in FIG. 9, when light having a wavelength of 1.31 $\mu$m is propagated, if the trench volume TV is 105 $\mu$m$^2$% or more, the confinement loss CL can be 0.01 dB/km or less even if the cladding thickness OCT is approximately 25.3 $\mu$m. In this case, if the trench volume TV is 190 $\mu$m$^2$% or more, the confinement loss CL can be 0.01 dB/km or less even if the cladding thickness OCT is approximately 21.7 $\mu$m. In this case, if the trench volume TV is 135 $\mu$m$^2$% or more, the confinement loss CL can be 0.001 dB/km or less even if the cladding thickness OCT is approximately 25.3 $\mu$m. In this case, if the trench volume TV is 215 $\mu$m$^2$% or more, the confinement loss CL can be 0.001 dB/km or less even if the cladding thickness OCT is approximately 21.7 $\mu$m or less.

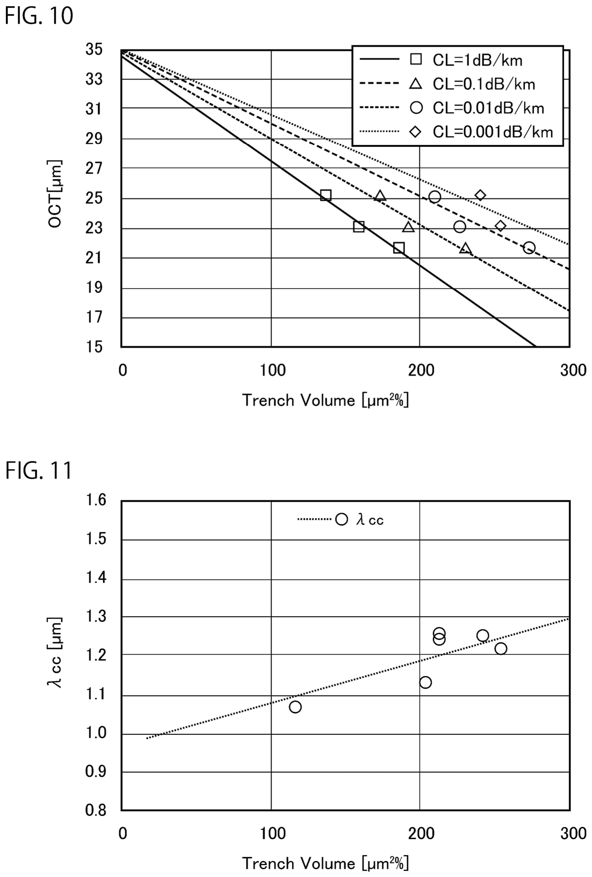

FIG. 10 is a diagram illustrating a relationship between the trench volume TV and the cladding thickness OCT in the case where light having a wavelength of 1.625 $\mu$m is propagated through the core element 10 of the multicore fiber 1 under the same conditions as in the case of FIG. 9.

In the case of FIG. 10, the relationship between the trench volume TV and the cladding thickness OCT is as follows.

When confinement loss CL is 1 dB/km:

$$OCT = -0.0707TV + 34.7$$

When confinement loss CL is 0.1 dB/km:

$$OCT = -0.0589TV + 35.1$$

When confinement loss CL is 0.01 dB/km:

$$OCT = -0.0494TV + 35.0$$

When confinement loss CL is 0.001 dB/km:

$$OCT = -0.0431TV + 34.9$$

As illustrated in FIG. 10, in the case where light having a wavelength of 1.625 $\mu$m is propagated, if the trench volume TV is 196 $\mu$m$^2$% or more, the confinement loss CL can be 0.01 dB/km or less by setting the cladding thickness OCT to approximately 25.3 $\mu$m. In this case, if the trench volume TV is 269 $\mu$m$^2$% or more, the confinement loss CL can be 0.01 dB/km or less even if the cladding thickness OCT is approximately 21.7 $\mu$m. In this case, when the trench volume TV is 223 $\mu$m$^2$% or more, the confinement loss CL can be set to 0.001 dB/km or less if the cladding thickness OCT is set to approximately 25.3 $\mu$m. In this case, if the trench volume TV is 306 $\mu$m$^2$% or more, the confinement loss CL can be 0.001 dB/km or less even if the cladding thickness OCT is approximately 21.7 $\mu$m.

From the results of FIGS. 7 and 9, the case where light having a wavelength of 1.31 $\mu$m is propagated through the multicore fiber 1 is as follows. When the trench volume TV is 105 $\mu$m$^2$% or more, by setting the core pitch A to 35 $\mu$m or more and setting the cladding thickness OCT to approximately 25.3 $\mu$m, it is possible to make the crosstalk XT from one adjacent core -35 dB/km or less and make the confinement loss CL 0.01 dB/km or less. Therefore, when the trench volume TV is 105 $\mu$m$^2$% or more, it is possible to set the diameter of the cladding 20 to 104 $\mu$m or less while maintaining sufficient quality of optical communication. That is, it is possible to reduce the diameter of the cladding 20 while maintaining sufficient quality of optical communication. In addition, if the trench volume TV is 135 $\mu$m$^2$% or more, the confinement loss CL can be 0.001 dB/km or less under this condition.

When the trench volume TV is 190 $\mu$m$^2$% or more, by setting the core pitch A to approximately 40 $\mu$m and setting the cladding thickness OCT to approximately 21.7 $\mu$m or less, it is possible to make the crosstalk XT from one adjacent core -35 dB/km or less, and make the confinement loss CL 0.01 dB/km or less. Therefore, when the trench volume TV is 190 $\mu$m$^2$% or more, it is possible to set the diameter of the cladding 20 to 104 $\mu$m or less while maintaining sufficient quality of optical communication. That is, it is possible to reduce the diameter of the cladding 20 while maintaining sufficient quality of optical communication. In this case, even if the core pitch A is approximately 35 $\mu$m, the crosstalk XT from one adjacent core can be made -35 dB/km or less. Therefore, by setting the core pitch $\Lambda$ to approximately 35 $\mu$m and setting the cladding thickness OCT to approximately 21.7 $\mu$m, it is possible to set the diameter of the cladding 20 to 93 $\mu$m or less. In addition, when the trench volume TV is 215 $\mu$m$^2$% or more, even if the cladding thickness OCT is approximately 21.7 $\mu$m, the confinement loss CL can be 0.001 dB/km or less.

From the results of FIGS. 8 and 10, when light having a wavelength of 1.625 $\mu$m is propagated through the multicore fiber 1, the following results are obtained. When the trench volume TV is 234 $\mu$m$^2$% or more, by setting the core pitch $\Lambda$ to approximately 35 $\mu$m, it is possible to make the crosstalk XT from one adjacent core -30 dB/km or less, and even if the cladding thickness OCT is approximately 25.3 $\mu$m, the confinement loss CL can be set to 0.01 dB/km or less. Therefore, when the trench volume TV is 234 $\mu$m$^2$% or more, the diameter of the cladding 20 can be 100 $\mu$m or less while maintaining sufficient quality of optical communication. When the trench volume TV is 234 $\mu$m$^2$% or more, the confinement loss CL can be 0.001 dB/km or less even if the cladding thickness OCT is approximately 25.3 $\mu$m.

In addition, when the trench volume TV is 269 $\mu$m$^2$% or more, the crosstalk XT from one adjacent core can be set to -30 dB/km or less if the core pitch A is set to 40 $\mu$m, and the confinement loss CL can be set to 0.01 dB/km or less if the cladding thickness OCT is set to approximately 21.7 $\mu$m. Therefore, when the trench volume TV is 269 $\mu$m$^2$% or more, the diameter of the cladding 20 can be 104 $\mu$m or less while maintaining sufficient quality of optical communication. That is, it is possible to reduce the diameter of the cladding 20 while maintaining sufficient quality of optical communication. In this case, even if the core pitch A is approximately 35 $\mu$m, the crosstalk XT from one adjacent core can be made -30 dB/km or less. Therefore, by setting the core pitch A to approximately 35 $\mu$m and setting the cladding thickness OCT to approximately 21.7 $\mu$m, it is possible to set the diameter of the cladding 20 to 93 $\mu$m or less. In addition, if the trench volume TV is 306 $\mu$m$^2$% or more, the confinement loss CL can be 0.001 dB/km or less under this condition.

Next, the upper limit of the trench volume TV will be described.

FIG. 11 is a diagram illustrating a relationship between the trench volume TV and a 22 m-cable cutoff wavelength Acc. When the wavelength is longer than Acc illustrated in FIG. 11, the light of a single mode can propagate. As illustrated in FIG. 11, the relationship between the trench volume TV and the cable cutoff wavelength Acc is expressed by the following Expression (3).

$$\lambda cc = 0.0011TV + 0.9707 \quad (3)$$

In G. 652. D, the cable cutoff wavelength $\lambda$cc in the case of propagating light having a wavelength of 1.31 $\mu$m is determined to be 1.26 $\mu$m or less. In this case, according to Expression (3), the upper limit of the trench volume TV is 263 $\mu$m$^2$%. However, in the case of manufacturing an optical fiber, the cable cutoff wavelength $\lambda$cc decreases by about 30 nm due to the residual stress in the glass of the optical fiber in the drawing process. Therefore, the cable cutoff wavelength Acc can be set to 1.29 $\mu$m or less. Therefore, in this case, the upper limit of the trench volume TV is 290 $\mu$m$^2$%. When the trench volume TV increases, the stress remaining in the optical fiber after drawing the optical fiber tends to be uneven in a cross section of the optical fiber due to a difference in viscosity of glass between the trench and other regions, and desired performance may not be obtained. Therefore, the upper limit of the trench volume TV is 350 $\mu$m$^2$%.

Although the present invention has been described by taking the embodiment as an example, the present invention is not limited to the above embodiment.

For example, in the above embodiment, the example has been described in which the outer diameter Dtrench of the trench layer 13 is in the range of 25 $\mu$m to 35.04 $\mu$m and the mode field diameter is in the range of 8.4 $\mu$m to 8.6 $\mu$m based on r3 of Table 2. However, in the case where the outer diameter Dtrench of the trench layer is 40 $\mu$m or less and the mode field diameter is 8.8 $\mu$m or less, if the trench volume TV satisfies 106 $\mu$m$^2$% or more and 350 $\mu$m$^2$% or less, it is substantially the same as the crosstalk described above and substantially the same as the confinement loss CL described above.

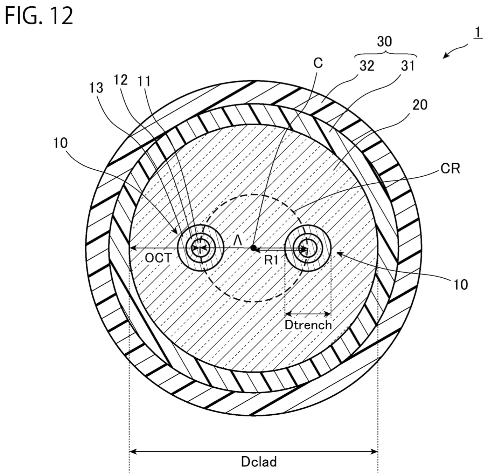

In the above embodiment, the four core elements 10 have been described as examples. However, the number of core elements may be, for example, two. FIG. 12 is a diagram illustrating a multicore fiber 1 in which two core elements 10 are provided. As illustrated in FIG. 12, when there are two core elements, the diameter Dclad of the cladding 20 is expressed by the following Expression (4).

$$Dclad = \Lambda + 2OCT \quad (4)$$

Therefore, from the results of FIGS. 7 and 9, in the case where light having a wavelength of 1.31 $\mu$m is propagated through the multicore fiber 1, when the trench volume TV is 105 $\mu$m$^2$% or more, by setting the core pitch $\Lambda$ to 35 $\mu$m, and setting the crosstalk XT from one adjacent core to -35 dB/km or less and setting the cladding thickness OCT to approximately 25.3 $\mu$m, it is possible to set the diameter of the cladding 20 to 85.6 $\mu$m while the confinement loss CL is 0.01 dB/km or less, and when the trench volume TV is 135 $\mu$m$^2$% or more, the confinement loss CL can be further reduced to 0.001 dB/km or less. In addition, if the trench volume TV is 190 $\mu$m$^2$% or more, even if the crosstalk XT from one adjacent core is -35 dB/km or less and the cladding thickness OCT is about 21.7 $\mu$m while the above-described core pitch is maintained, the confinement loss CL can be 0.01 dB/km or less and the diameter of the cladding 20 can be reduced to 78.4 $\mu$m, and if the trench volume TV is 215 $\mu$m$^2$% or more, the confinement loss CL can be further reduced to 0.001 dB/km or less. As described above, in the case where light having a wavelength of 1.31 $\mu$m is propagated through the multicore fiber 1, if the trench volume TV is 105 $\mu$m$^2$% or more, it is possible to set the diameter of the cladding 20 to 90 $\mu$m or less while maintaining sufficient quality of optical communication. That is, it is possible to reduce the diameter of the cladding 20 while maintaining sufficient quality of optical communication.

Further, from the results of FIGS. 8 and 10, in the case where light having a wavelength of 1.625 $\mu$m is propagated through the multicore fiber 1, when the trench volume TV is 196 $\mu$m$^2$% or more, by setting the core pitch $\Lambda$ to 40 $\mu$m, and setting the crosstalk XT from one adjacent core to -30 dB/km or less and setting the cladding thickness OCT to approximately 25.3 $\mu$m, it is possible to reduce the diameter of the cladding 20 to 90.6 $\mu$m while the confinement loss CL is 0.01 dB/km or less, and when the trench volume TV is 223 $\mu$m$^2$% or more, the confinement loss CL can be further reduced to 0.001 dB/km or less. Moreover, when the trench volume TV is 269 $\mu$m$^2$% or more, by setting the core pitch $\Lambda$ to 35 $\mu$m, and setting the crosstalk XT from one adjacent core to -30 dB/km or less and setting the cladding thickness OCT to approximately 21.7 $\mu$m, it is possible to reduce the diameter of the cladding 20 to 78.4 $\mu$m while the confinement loss CL is 0.01 dB/km or less. When the trench volume TV is 306 $\mu$m$^2$% or more, the confinement loss CL can be further reduced to 0.001 dB/km or less. As described above, in the case where light having a wavelength of 1.625 $\mu$m is propagated through the multicore fiber 1, if the trench volume TV is 196 $\mu$m$^2$% or more, it is possible to set the diameter of the cladding 20 to 90 $\mu$m or less while maintaining sufficient quality of optical communication. That is, it is possible to reduce the diameter of the cladding 20 while maintaining sufficient quality of optical communication.

Note that when the number of core elements 10 is three, the core elements 10 are arranged on the circumference CR about the center of the cladding, so that the diameter of the cladding 20 can be set to a size between the diameter of the cladding 20 when the number of core elements is two and the diameter of the cladding 20 when the number of core elements is four.

In the above embodiment, the configuration in which the core element 10 includes the outer core 12 has been described. However, the outer core 12 is not an essential configuration, and the core element 10 may not include the outer core 12.

Further, in the above embodiment, an example in which the core pitch $\Lambda$ is equal has been described, but the present invention is not limited thereto, and the core pitch $\Lambda$ may not be equal as long as the core element 10 is disposed on the circumference CR.

As described above, according to the present invention, a multicore fiber capable of suppressing crosstalk and confinement loss while reducing the diameter of a cladding is provided, and the multicore fiber can be used in the field of optical communication and other devices using a multicore fiber.

**Claims**

1. A multicore fiber comprising:

   two to four core elements each including a core and a trench layer that surrounds an outer circumferential surface of the core; and
   a cladding that surrounds the outer circumferential surface of each of the core elements without any gap, wherein
   each of the core elements is disposed on a circumference centered on a center of the cladding,
   a diameter of each of the core elements is equal to or smaller than a size smaller by 1 $\mu$m than a core pitch between the core element and another core element adjacent to the core element at a shortest distance,
   a mode field diameter of light in a case where the light having a wavelength of 1.31 $\mu$m propagates through the core is 8.8 $\mu$m or less, and
   a trench volume that is a product of a cross-sectional area of the trench layer in a cross section perpendicular to a longitudinal direction of the cladding and an absolute value of a relative refractive index difference of the trench layer with respect to the cladding is 105 $\mu$m$^2$% or more and 350 $\mu$m$^2$% or less.

2. The multicore fiber according to claim 1, wherein
   the trench volume is 136 $\mu$m$^2$% or more.

3. The multicore fiber according to claim 1, wherein
   the trench volume is 190 $\mu$m$^2$% or more.

4. The multicore fiber according to claim 1, wherein
   the trench volume is 214 $\mu$m$^2$% or more.

5. The multicore fiber according to claim 1, wherein
   the trench volume is 234 $\mu$m$^2$% or more.

6. The multicore fiber according to claim 1, wherein
   the trench volume is 269.7 $\mu$m$^2$% or more.

7. The multicore fiber according to claim 1, wherein
   the trench volume is 306 $\mu$m$^2$% or more.

FIG. 1

FIG. 2

FIG. 3

1.31μm

FIG. 4

BENDING RADIUS [mm]

CROSSTALK FROM ONE ADJACENT CORE [dB/km]

- ◆— Λ 40 μm
- ■— Λ 39 μm
- ☐— Λ 38 μm
- ▲— Λ 37 μm
- △— Λ 36 μm
- ●— Λ 35 μm

1.625μm

FIG. 5

Confinement Loss [dB/km]

— ○ LP01_1.625
······ ● LP01_1.55
- - - ■ LP01_1.31

OCT [μm]

FIG. 6

FIG. 7

FIG. 8

FIG. 9

FIG. 10

FIG. 11

FIG. 12

## INTERNATIONAL SEARCH REPORT

| International application No. |
|---|
| **PCT/JP2024/020843** |

### A. CLASSIFICATION OF SUBJECT MATTER

*G02B 6/02*(2006.01)i; *G02B 6/036*(2006.01)i
FI:   G02B6/02 461; G02B6/036

According to International Patent Classification (IPC) or to both national classification and IPC

### B. FIELDS SEARCHED

Minimum documentation searched (classification system followed by classification symbols)

G02B6/02: G02B6/036

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2014/087974 A1 (SUMITOMO ELECTRIC INDUSTRIES, LTD.) 12 June 2014 (2014-06-12)<br>paragraphs [0038]-[0043], [0067], [0077], [0079], fig. 5(A)-6(B), 18 | 1-7 |
| X | JP 2018-21999 A (NIPPON TELEGRAPH AND TELEPHONE CORPORATION) 08 February 2018 (2018-02-08)<br>paragraphs [0038], [0053]-[0054], [0058], fig. 14(a), 24, 26 ("Structure A") | 1-7 |
| A | JP 2020-86054 A (NIPPON TELEGRAPH AND TELEPHONE CORPORATION) 04 June 2020 (2020-06-04)<br>entire text, all drawings | 1-7 |
| A | US 2017/0336559 A1 (CORNING INC.) 23 November 2017 (2017-11-23)<br>entire text, all drawings | 1-7 |

☐ Further documents are listed in the continuation of Box C.     ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **30 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/020843**

| Patent document cited in search report | Publication date (day/month/year) | Patent family member(s) | Publication date (day/month/year) |
|---|---|---|---|
| WO 2014/087974 A1 | 12 June 2014 | US 2015/0268414 A1<br>paragraphs [0079]-[0085], [0112], [0122], [0124], fig. 5A-6B, 18<br>US 2016/0170135 A1<br>EP 2930546 A1<br>CN 104838298 A | |
| JP 2018-21999 A | 08 February 2018 | (Family: none) | |
| JP 2020-86054 A | 04 June 2020 | US 2022/0003920 A1<br>US 2024/0118486 A1<br>WO 2020/105470 A1<br>EP 3885804 A1<br>CN 112969941 A<br>CN 115421239 A<br>CN 117192679 A | |
| US 2017/0336559 A1 | 23 November 2017 | WO 2017/200986 A1<br>CN 109154695 A | |

Form PCT/ISA/210 (patent family annex) (July 2022)

**EP 4 729 997 A1**

**Patent documents cited in the description**

- JP 2020086054 A